# EUROPEAN PATENT SPECIFICATION

(11) **EP 4 269 862 B1**
(45) Date of publication and mention of the grant of the patent: **12.11.2025**
(21) Application number: 21910771.1
(22) Date of filing: 21.12.2021
(51) Int. Cl.: F17C 13/00, F17D 5/02, G01M 3/20, G01M 3/28, F16L 55/00, F16L 59/065, F16L 9/18

(54) **VACUUM INSULATED PIPE UNIT FOR LIQUEFIED GAS AND METHOD FOR DETECTING DAMAGE IN VACUUM INSULATED PIPE FOR LIQUEFIED GAS**
VAKUUMISOLIERTE ROHREINHEIT FÜR FLÜSSIGGAS UND VERFAHREN ZUR ERKENNUNG VON SCHÄDEN IN EINEM VAKUUMISOLIERTEN ROHR FÜR FLÜSSIGGAS
UNITÉ DE TUYAU ISOLÉ SOUS VIDE POUR GAZ LIQUÉFIÉ ET PROCÉDÉ DE DÉTECTION DE DOMMAGE DANS UN TUYAU ISOLÉ SOUS VIDE POUR GAZ LIQUÉFIÉ

(30) Priority: 24.12.2020 JP 2020215771
(43) Date of publication of application: 01.11.2023
(73) Proprietor: KAWASAKI JUKOGYO KABUSHIKI KAISHA, Kobe-shi, Hyogo 650-8670 (JP)
(72) Inventor: URAGUCHI, Ryosuke, Kobe-shi, Hyogo 650-8670 (JP); SHIMOGAKI, Takashi, Kobe-shi, Hyogo 650-8670 (JP); MURAGISHI, Osamu, Kobe-shi, Hyogo 650-8670 (JP); GOKAN, Kazuto, Kobe-shi, Hyogo 650-8670 (JP); TANIMOTO, Keisuke, Kobe-shi, Hyogo 650-8670 (JP); KANBE, Katsuhiro, Kobe-shi, Hyogo 650-8670 (JP)
(74) Representative: Arnold & Siedsma
(86) International application number: PCT/JP2021/047285
(87) International publication number: WO 2022/138628

(56) References cited:
- EP-A1- 3 670 993
- GB-A- 2 270 962
- JP-A- 2001 349 499
- JP-A- 2009 217 695
- JP-A- 2010 133 725
- JP-A- 2016 070 377
- JP-A- 2017 019 552
- JP-Y2- 2 561 667
- US-A1- 2017 350 867

## Description

### CROSS REFERENCE TO THE RELATED APPLICATION

This application is based on and claims Convention priority to Japanese patent application No. 2020-215771, filed December 24, 2020, the entire disclosure of which is herein incorporated by reference as a part of this application.

### BACKGROUND OF THE INVENTION

### (Field of the Invention)

The present disclosure relates to a vacuum heat insulation piping unit for a liquefied gas and a method for detecting a breakage (or damage) in a vacuum heat insulation piping for a liquefied gas.

### (Description of Related Art)

Vacuum heat insulation piping with a double-walled structure was hitherto proposed for use as piping to transfer a liquefied gas such as a liquefied natural gas or liquefied hydrogen between, for example, a liquefied gas carrier vessel and a tank on land (see, e.g., Patent Document 1). Such heat insulation piping achieves enhanced heat insulating performance by having a structure in which an inner tube is enclosed by an outer tube with a vacuum layer defined therebetween and can effectively mitigate possible elevation in the temperature of a cold liquefied gas flowing inside the inner tube. Patent Document 2 discloses an inline cycle fuse including a conduit and a containment structure that includes a cavity separated from an interior of the conduit by a portion of a conduit wall of the conduit, wherein a sensor is configured to determine a value of a physical property in the cavity and a controller is configured to detect a change in the value. Patent Document 3 discloses a connecting duct, which comprises a pressure line, a protective line encasing the pressure line with a clearance as a cavity, and a detecting, processing and switching element connected with the cavity between the pressure line and the protective line to detect, and react to, a change in the state of the cavity. Patent Document 4 discloses a conduit, comprising a bellows, which comprises corrugated inboard and outboard plies and an interstitial space therebetween, and a sensor communicatively coupled with the interstitial space.

### [Related Document]

- [Patent Document 1]: JP Laid-open Patent Publication No. 2015-004382
- [Patent Document 2]: US Patent Publication No. US 2017/0350867 A1
- [Patent Document 3]: UK Patent Publication No. GB 2 270 962 A
- [Patent Document 4]: European Patent Publication No. EP 3 670 993 A1

### SUMMARY OF THE INVENTION

As for piping used to transfer a liquefied gas, it is important to detect early when a breakage that could lead to gas leakage happens. However, piping with the abovementioned double-walled structure is difficult to visually inspect for presence of a breakage in the inner tube of the piping. Although it is conceivable to arrange a measuring instrument such as a vacuum gauge on the outer tube to detect occurrence of a breakage in the inner tube, this is not desirable because such arrangement leads to a complicated structure and/or an increased weight of the piping.

An object of the present disclosure is to detect a breakage in vacuum heat insulation piping for a liquefied gas, with a simple design and in a timely and reliable manner to solve the abovementioned problems.

To achieve the foregoing object, the present disclosure provides a vacuum heat insulation piping unit for a liquefied gas, which is a piping unit configured to transfer the liquefied gas and includes:
a vacuum heat insulation pipe including an inner tube configured to convey the liquefied gas therethrough and an outer tube covering the inner tube with a vacuum layer defined therebetween;
an inner-tube pressure measuring device configured to measure a pressure inside the inner tube;
an outer-tube pressure relief valve located on the outer tube; and
a gas detector configured to detect the type of a gas that is discharged through the outer-tube pressure relief valve.

Moreover, the present disclosure provides a liquefied gas storage tank unit which includes:
a tank configured to store a liquefied gas; and
a vacuum heat insulation piping unit for the liquefied gas as provided above, the piping unit being mounted to the tank and being configured to transfer the liquefied gas between the tank and a place external thereto.

The present disclosure provides a breakage detection method for a vacuum heat insulation pipe for a liquefied gas, which is a method for detecting occurrence of a breakage in a vacuum heat insulation pipe for transferring a liquefied gas, the vacuum heat insulation pipe including an inner tube configured to convey the liquefied gas therethrough and an outer tube covering the inner tube with a vacuum layer defined between the inner tube and the outer tube, the method including:
monitoring a pressure inside the inner tube by using an inner-tube pressure measuring device configured to measure the pressure inside the inner tube;
when an abnormal change is detected in measurements taken by the inner-tube pressure measuring device, monitoring whether an outer-tube pressure relief device located on the outer tube is actuated within a selected time period;
when the outer-tube pressure relief device is activated, detecting whether a detection target gas is discharged by using a gas detector; and
determining occurrence of a breakage in the inner tube or in the outer tube on the basis of the measurements taken by the inner-tube pressure measuring device and the presence or absence of discharge of the detection target gas as indicated by the gas detector.

According to these configurations, it is possible to find out when an outer-tube pressure relief valve in piping with a double-walled vacuum structure is highly likely to be actuated before actual actuation by relying on measurement of a pressure inside an inner tube and, moreover, to detect a breakage in the piping with a simple design and in a timely and reliable manner because the type of a gas discharged through the outer-tube pressure relief valve is detected in combination with the pressure measurement.

Any combinations of at least two features disclosed in the claims and/or the specification and/or the drawings should also be construed as encompassed by the present disclosure. Especially, any combinations of two or more of the claims should also be construed as encompassed by the present disclosure.

### BRIEF DESCRIPTION OF THE DRAWINGS

The present disclosure will be more clearly understood from the following description of preferred embodiments made by referring to the accompanying drawings. However, the embodiments and the drawings are given merely for the purpose of illustration and explanation, and should not be used to delimit the scope of the present disclosure, which scope is to be delimited by the appended claims. In the accompanying drawings, alike symbols denote alike or corresponding parts throughout the several figures. In the figures,
Fig. 1 is a lateral view that illustrates the general configurations of a vacuum heat insulation pipe for a liquefied gas and of a liquefied gas storage tank unit including the same according to an embodiment of the present disclosure;
Fig. 2 is a sectional view that illustrates the vacuum heat insulation pipe for the liquefied gas of Fig. 1 on an enlarged scale;
Fig. 3 is a sectional view that schematically illustrates the state of the pipe of Fig. 2 when a breakage happens in the inner tube;
Fig. 4 is a sectional view that schematically illustrates the state of the pipe of Fig. 2 when a breakage happens in the outer tube; and
Fig. 5 is a flowchart that illustrates a breakage detection method for a pipe according to an embodiment of the present disclosure.

### DESCRIPTION OF EMBODIMENTS

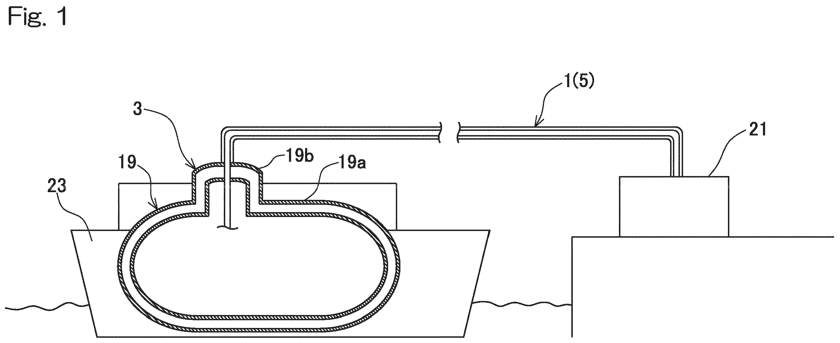

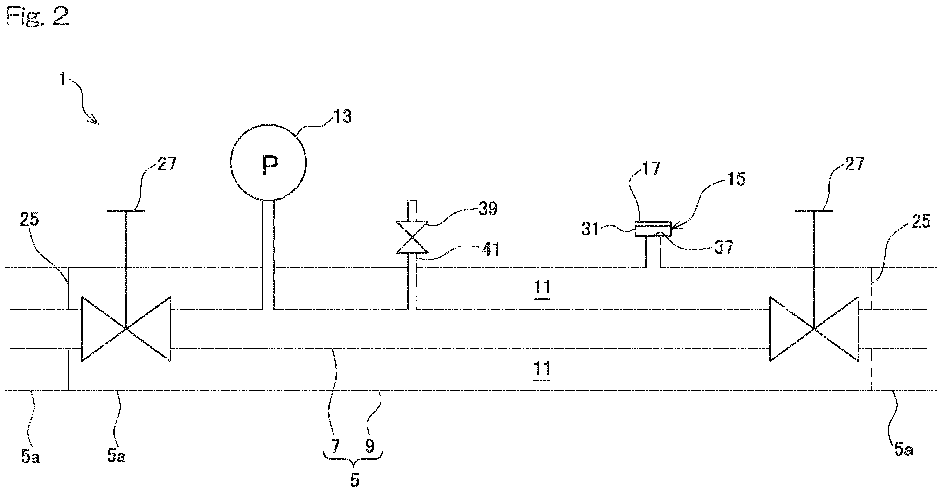

Hereinafter, preferred embodiments of the present disclosure are described with reference to the drawings. Fig. 1 shows a vacuum heat insulation piping unit 1 for a liquefied gas (hereinafter, simply referred to as a "piping unit"), and a liquefied gas storage tank unit 3 (hereinafter, simply referred to as a "tank unit") that includes such a piping unit 1 according to an embodiment of the present disclosure. The piping unit 1 is used to transfer a liquefied gas. The piping unit 1 includes a vacuum heat insulation pipe 5 (hereinafter, simply referred to as a "pipe") with a double-walled pipe structure. That is, the pipe 5 is formed of an inner tube 7 that conveys a liquefied gas therethrough and an outer tube 9 covering the inner tube 7, as shown in Fig. 2. A vacuum layer 11 defined in a radial space between the inner tube 7 and the outer tube 9. The piping unit 1 further includes an inner-tube pressure measuring device 13 that measures a pressure inside the inner tube 7, an outer-tube pressure relief device 15 located on the outer tube 9, and a gas detector 17 that detects the type of a gas that is discharged through the outer-tube pressure relief device 15.

As depicted in Fig. 1, the tank unit 3 includes a tank 19 that stores a liquefied gas and the aforementioned piping unit 1 which is mounted to the tank 19. The pipe 5 of the piping unit 1 transfers a liquefied gas between the tank 19 and a place external thereto, such as a liquefied gas storage terminal 21 on land. The tank unit 3 is installed in a vessel 23 such as a liquefied gas carrier vessel. Nevertheless, the tank unit 3 can be installed on land.

The liquefied gas to be stored in the tank 19 and transferred through the pipe 5 is, for example, a liquefied petroleum gas (LPG; at about -45°C), a liquefied ethylene gas (LEG; at about -100°C), a liquefied natural gas (LNG; at about -160°C), liquefied hydrogen (LH₂; at about -250°C), or liquefied helium (LHe; at about -270°C). In the instant embodiment, liquefied hydrogen is to be stored in the tank 19, and this liquefied hydrogen is to be transferred through the pipe 5.

In the instant embodiment, the tank 19 is constructed as a double-shell tank having an inner shell and an outer shell. For instance, a vacuum heat insulation layer is defined between the inner shell and the outer shell. Nevertheless, the construction of the tank 19 is not limited to this example. For instance, the tank 19 may have a vacuum heat insulation layer packed with a powder heat insulation material in the form of heat insulation granules such as perlite. Alternatively, the tank 19 may be a single-shell tank covered with a heat insulation material. The heat insulation material in this case may, for example, be formed of a plurality of vacuum heat insulation panels or be formed of a plurality of foamed panels.

To give more details, the tank 19 in the instant embodiment has a body part 19a which is a part where a liquefied gas is to be stored and a dome part 19b which projects upwards from the body part 19a. The pipe 5 of the piping unit 1 is mounted to the dome part 19b. Note that, while only one piping unit 1 is depicted in the figure for simplicity, a plurality of piping units 1 may be associated with a single tank 19. The pipe 5 is arranged to extend from the interior of the body part 19a to the exterior of the tank 19, penetrating through the dome part 19b. In the instant embodiment, the part of the pipe 5 which is positioned to extend in the exterior of the dome part 19b is constructed as a double-walled vacuum pipe that is discussed in detail below.

In the instant embodiment, as depicted in Fig. 2, the pipe 5 is constructed by coupling together a plurality of pipe segments 5a in a length direction thereof. In particular, each of the pipe segments 5a is provided, at each of opposite ends thereof, with a shield 25 that closes the vacuum layer 11 between the outer tube 9 and the inner tube 7, as shown in Fig. 2. Further, the inner tube 7 in each of the pipe segments 5a is provided with a gate valve 27 in proximity to each of opposite ends thereof. Building the pipe 5 by combining the pipe segments 5a having such a structure not only facilitates the installation operation of the pipe 5 but also makes it easier to maintain and control a degree of vacuum in the vacuum layer 11.

In the instant embodiment, an outer-tube pressure relief valve - more specifically, a seal-off valve - is used as the outer-tube pressure relief device 15. The seal-off valve serving as the outer-tube pressure relief device 15 includes a cylindrical valve body 31 located on the outer peripheral surface of the outer tube 9 so as to project therefrom, and a disc-shaped valve element (not shown) fitted to the inner periphery of the valve body 31. An O-ring is mounted to the outer peripheral surface of the valve element. In the instant example, the outer-tube pressure relief device 15 is provided for each of the pipe segments 5a.

At the outer-tube pressure relief device 15 which is configured as a seal-off valve in the instant embodiment, the valve element is pressed against the valve body 31 by the action of the vacuum pressure in the vacuum layer 11 during a normal operation. When, as a consequence of a breakage in the pipe 5, etc., a positive pressure prevails inside the outer tube 9, the valve element is kept in place with respect to the valve body 31 only by a friction force between the inner peripheral surface of the valve body 31 and the O-ring. In other words, when the pressure in the vacuum layer 11 is less than a predetermined set activation value, the valve element closes a gas discharge outlet 37 in the valve body 31 of the outer-tube pressure relief device 15. On the other hand, when the pressure in the vacuum layer 11 rises above the set activation value, the pressure forces the valve element to be detached from the inner periphery of the valve body 31, causing the gas within the pipe 5 to be released from the gas discharge outlet 37. The set activation value for the outer-tube pressure relief device 15 is chosen to be sufficiently smaller than a maximum allowable pressure design value for the outer tube 9 (for example, the value is chosen to be approximately in the range of 1/100 to 1/10 of the maximum allowable pressure design value for the outer tube 9). Note that, at the time of installing the pipe 5, a vacuum pump is coupled to the gas discharge outlet 37 to evacuate the interior of the outer tube 9 to a vacuum via the gas discharge outlet 37.

Note that the outer-tube pressure relief device 15 is not limited to the seal-off valve described above. Any other device may be employed as long as the device is capable of releasing gas when the predetermined set activation value is reached. Nevertheless, use of an outer-tube pressure relief valve, such as the seal-off valve on the outer tube 9 that defines the vacuum layer 11 therein, can simplify the structure of the piping unit 1.

Furthermore, as shown in Fig. 2, the inner tube 7 is provided with an inner-tube pressure relief device 39 (which is, in the instant example, an inner-tube pressure relief valve). In the illustrated example, a pressure relief passage 41 branches from the inner tube 7, and the inner-tube pressure relief device 39 is located in this pressure relief passage 41. For example, a springloaded safety valve is employed as the inner-tube pressure relief device 39.

In the instant embodiment, a gas detection tape configured to change color when coming into contact with a detection target gas (which is, in the instant embodiment, a hydrogen gas) is employed as the gas detector 17. The gas detection tape is attached to the gas discharge outlet 37 of the outer-tube pressure relief device 15.

Next, a method for detecting occurrence of a breakage in the pipe 5 of the piping unit 1 having the above configuration and shown in Fig. 2 is discussed.

To begin with, circumstances resulting from occurrence of a breakage in either one of the inner tube 7 or the outer tube 9 are described, the circumstances being assumed in the method for detecting occurrence of a breakage in the pipe 5. The following discussions are based on the assumption that, as an example, unloading operation of a liquefied gas from the tank 19 via the pipe 5 has been completed, and an on-off valve between the tank 19 and the pipe 5 is closed (that is, the liquefied gas is not flowing through the pipe 5 but is retained inside the pipe 5). Also, in the following discussions, the gas to be stored in the tank 19 and transferred through the pipe 5 - the gas of interest for leakage detection in this breakage detection method - may sometimes be called a "detection target gas." The detection target gas may be in a liquid phase, in a gas phase, or in a mixed phase thereof.

Firstly, in a normal state where there is no breakage in either one of the inner tube 7 or the outer tube 9, heat input to the pipe 5 from the external environment causes a gradual temperature rise in the inner tube 7 and thereby a continuous and slow pressure rise in the inner tube 7. Nevertheless, because the pipe 5 is constructed as a vacuum heat insulation pipe 5 as mentioned above, the pressure rise in the inner tube 7 in a normal state proceeds at a very slow rate.

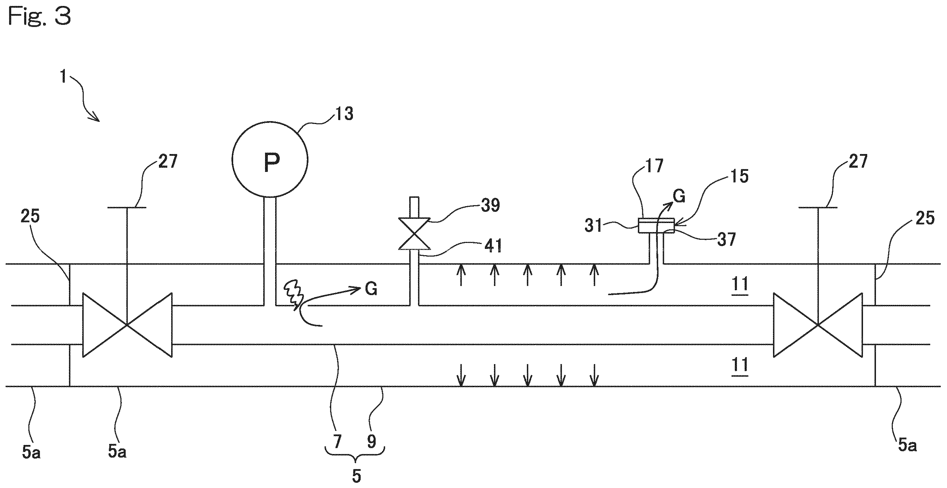

If, in this normal state, a relatively large breakage occurs in the inner tube 7 as shown in Fig. 3, the detection target gas G leaks at the breakage site into the vacuum layer 11 within the outer tube 9. Then, due to the pressure difference between the interior of the inner tube 7 and the vacuum layer 11, the internal pressure of the inner tube 7 drops rapidly.

When the detection target gas G leaks into the vacuum layer 11, heat insulation performance of the vacuum layer 11 is deteriorated, so that the detection target gas G undergoes a temperature rise and evaporates due to heat input from the external environment. Thus, the pressure inside the inner tube 7, which has once been dropped, is increased again. Along with this pressure rise inside the inner tube 7, the detection target gas G further leaks into the interior of the outer tube 9, raising the pressure inside the outer tube 9 as well.

In contrast, when a small breakage occurs in the inner tube 7, the pressure inside the inner tube 7 is slowly decreased initially after the occurrence of the breakage, due to the detection target gas G leaking from the inner tube 7. Then, the internal pressure of the inner tube 7 is slowly increased as a result of degradation of heat insulation performance of the vacuum layer 11. The temperature of the inner tube 7 also rises due to degradation of heat insulation performance of the vacuum layer 11, so that the detection target gas G escaping into the vacuum layer 11 expands to increase the pressure inside the outer tube 9.

When the pressure inside the outer tube 9 reaches the set activation value for the outer-tube pressure relief device 15, the outer-tube pressure relief device 15 is activated to discharge the detection target gas G. In this process, the gas detector 17 (i.e., gas detection tape) attached to the gas discharge outlet 37 of the outer-tube pressure relief device 15 responds to the detection target gas G and changes color, providing a status that is able to indicate discharge of the detection target gas G.

Next, circumstances resulting from occurrence of a breakage in the outer tube 9 and consequential leakage of a liquefied gas from the outer tube 9 are described.

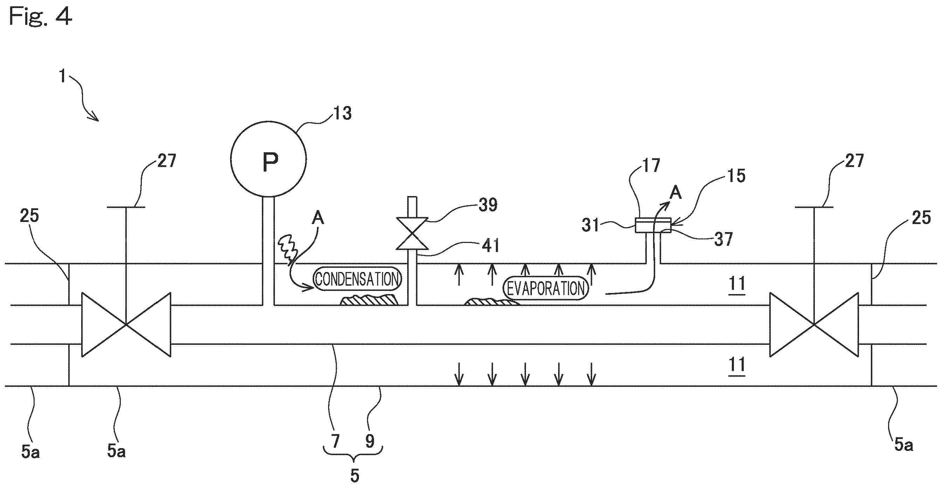

When a breakage occurs in the outer tube 9, and air A flows into the vacuum layer 11 from the external environment as shown in Fig. 4, heat insulation performance of the vacuum layer 11 is deteriorated, so that the detection target gas G undergoes a temperature rise and evaporates due to heat input from the external environment. Thus, the pressure inside the inner tube 7 is rapidly increased.

Where the breakage in the outer tube 9 is small in magnitude, and a small amount of air A flows into the vacuum layer 11 from the external environment, the air A that has flown into the vacuum layer 11 is cooled by the inner tube 7 having a low temperature and thereby condensates onto the surface of the inner tube 7 as liquefied air A. Thereafter, as the air A further flows in, the temperature on the surface of the inner tube 7 and in the vacuum layer rises, causing the once liquefied air A to evaporate. Through such inflow of the air A from the external environment and evaporation of the liquefied air A, the pressure in the vacuum layer 11, or inside the outer tube 9, is increased.

When the pressure inside the outer tube 9 reaches the set activation value for the outer-tube pressure relief device 15, the outer-tube pressure relief device 15 is activated to discharge the air A. In this process, the gas detector 17 (i.e., gas detection tape) attached to the gas discharge outlet 37 of the outer-tube pressure relief device 15 does not respond to the air A, providing a status that is able to indicate no discharge of the detection target gas G.

Where the breakage in the outer tube 9 is large in magnitude, and a huge amount of air A flows into the vacuum layer 11 from the external environment upon the occurrence of the breakage, one of the possible scenarios may be that the pressure inside the outer tube 9 does not reach the set activation value for the outer-tube pressure relief device 15 while the inner tube 7 experiences a rapid and substantial rise in the internal pressure as a result of substantial deterioration in the vacuum degree as well as the temperature rise in the inner tube 7. In this case, only the inner-tube pressure relief device 39 is activated, but the outer-tube pressure relief device 15 is not activated.

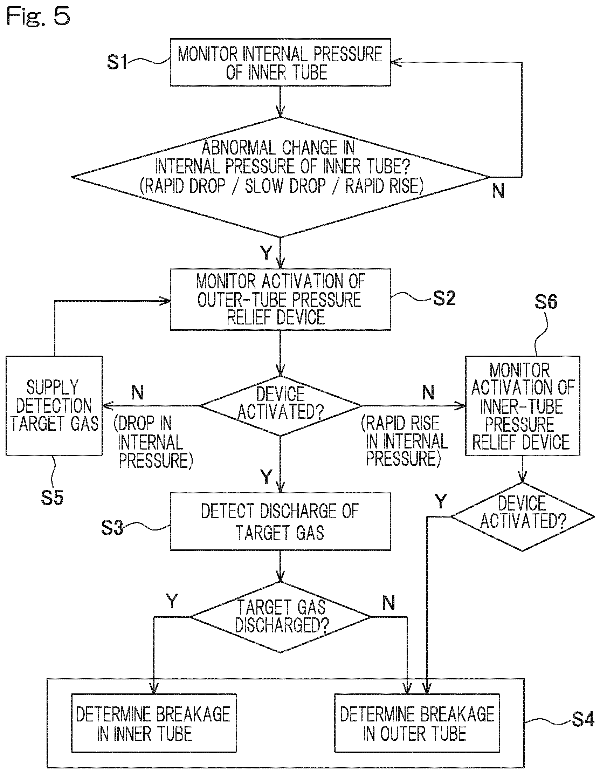

In view of the abovementioned circumstances triggered by occurrence of a breakage in the inner tube 7 or the outer tube 9, a breakage detection method for a pipe 5 according to the present embodiment includes, as illustrated in Fig. 5, monitoring a pressure inside the inner tube 7 by using the inner-tube pressure measuring device 13 (i.e., an inner-tube internal pressure monitoring step S1); when an abnormal change is detected in measurements taken by the inner-tube pressure measuring device 13, monitoring whether the outer-tube pressure relief device 15 is activated within a selected time period (i.e., an outer-tube pressure relief device activation monitoring step S2); when the outer-tube pressure relief device 15 is activated, detecting whether the detection target gas is discharged by using the gas detector 17 (i.e., a target-gas discharge detecting step S3); and determining occurrence of a breakage in the inner tube 7 or in the outer tube 9 on the basis of the measurements taken by the inner-tube pressure measuring device 13 and the type of the discharged gas as indicated by the gas detector 17, (i.e., a breakage occurrence determining step S4).

The term "abnormal change" in measurements taken by the inner-tube pressure measuring device 13 herein means a change behavior distinct from that of a continuous and slow rise in the pressure inside the inner tube 7 during a normal state that is discussed earlier. More specifically, typical examples of "abnormal change" include a rapid change (or drop) in the pressure inside the inner tube 7 resulting from occurrence of a relatively large breakage in the inner tube 7; a slow drop in the pressure inside the inner tube 7 resulting from occurrence of a small breakage in the inner tube 7; and a rapid change (or rise) in the pressure inside the inner tube 7 resulting from occurrence of a breakage in the outer tube 9 as mentioned above.

In particular, when a drop (i.e., a rapid drop or a slow drop) in the measurements is detected at the inner-tube internal pressure monitoring step S1, it may be subsequently confirmed that the outer-tube pressure relief device 15 is activated at the outer-tube pressure relief device activation monitoring step S2. Then, if discharge of the detection target gas G (which is, in the instant example, a hydrogen gas) is detected at the step S3 by means of the gas detector 17 (which is, in the instant example, a gas detection tape attached to the gas discharge outlet 37 of the outer-tube pressure relief device 15), it is determined that a breakage has occurred in the inner tube 7 at the breakage occurrence determining step S4.

Meanwhile, when a rapid rise in the measurements is detected at the inner-tube internal pressure monitoring step S1, it may be subsequently confirmed that the outer-tube pressure relief device 15 is activated at the outer-tube pressure relief device activation monitoring step S2. Then, by confirming that there has been no discharge of the detection target gas G by means of the gas detector 17, it is determined that a breakage has occurred in the outer tube 9 at the breakage occurrence determining step S4.

What behavior of a pressure change is to be identified as "abnormal" (e.g., what rate of pressure drop or pressure rise is to be defined as "slow" or "rapid") at the inner-tube internal pressure monitoring step S1 is set as appropriate through experiments and calculations conducted in advance, based on the type of the detection target gas G, the size of the pipe 5, the size of the tank 19, the amount of the gas stored, etc. Likewise, for what time period a valve is monitored for activation at the outer-tube pressure relief device activation monitoring step S2 is also set as appropriate through experiments and calculations conducted in advance.

Even when occurrence of a breakage in the inner tube 7 has brought about an abnormal change (which is, in the instant example, a rapid drop or a slow drop) in the pressure inside the inner tube 7, in some cases, the pressure inside the outer tube 9 may not exhibit a sufficient rise to trigger the activation of the outer-tube pressure relief device 15. Such a situation tends to arise, for example, when a tiny breakage has occurred in the inner tube 7. To address such a situation, the method may additionally include a step of supplying the detection target gas G from an external source into the inner tube 7 (i.e., a detection target gas supplying step S5) in the event that, while it is detected at the inner-tube internal pressure monitoring step S1 that an abnormal change has occurred in the measurements taken by the inner-tube pressure measuring device 13, an activation of the outer-tube pressure relief device 15 is not subsequently confirmed within the predefined, selected time period at the outer-tube pressure relief device activation monitoring step S2. In such a case, the outer-tube pressure relief device activation monitoring step S2 is performed again after the detection target gas G supplying step. If it is confirmed that the outer-tube pressure relief device 15 is activated, and if discharge of the detection target gas G is detected by means of the gas detector 17, it is determined that a breakage has occurred in the inner tube 7.

Note that regardless of whether there has or has not been an abnormal change in the pressure inside the inner tube 7, the detection target gas G may be supplied from an external source into the inner tube 7 if an activation of the outer-tube pressure relief device 15 is not confirmed within the predefined, selected time period.

In particular, the supplying of the detection target gas G can be performed, for example, by applying cool-down that is provided for a loading and/or unloading operation. Also, in case of a large-sized liquefied gas carrier vessel equipped with a cool-down system, the supplying of the gas may even be performed during operation of the vessel by making use of the cool-down system.

Meanwhile, as described above, when the breakage in the outer tube 9 is large in magnitude, one of the possible scenarios may be that the pressure inside the outer tube 9 does not reach the set activation value for the outer-tube pressure relief device 15 while the inner tube 7 experiences a rapid and substantial rise in the internal pressure, ending up with the outer-tube pressure relief device 15 not being activated. To address such a situation, the method may additionally include a step of monitoring whether the inner-tube pressure relief device 39 is activated (i.e., an inner-tube pressure relief device activation monitoring step S6) in the event that, while it is detected at the inner-tube internal pressure monitoring step S1 that a rapid rise has occurred in the measurements taken by the inner-tube pressure measuring device 13, an activation of the outer-tube pressure relief device 15 is not subsequently confirmed at the outer-tube pressure relief device activation monitoring step S2. In such a case, if activation of the inner-tube pressure relief device 39 is confirmed, it is determined that a breakage has occurred in the outer tube 9.

Note that detection of discharge of the detection target gas G at the target-gas discharge detecting step S3 may be performed by using a different gas detector 17 in place of the gas detection tape attached to the gas discharge outlet 37 of the outer-tube pressure relief device 15. For example, a portable gas detector may be brought close to the gas discharge outlet 37 by a person responsible for the management of the pipe 5, for direct measurement in order to detect discharge of the detection target gas G.

Note that, when discharge of the detection target gas G is not detected at the target-gas discharge detecting step S3 despite the fact that a drop in the internal pressure has been detected at the inner-tube internal pressure monitoring step S1, other causes may be suspected such as leakage via a gate valve or gate valves 27 at the inner tube 7, instead of a breakage in the inner tube 7. Hence, relevant sites including such gate valve(s) 27 should be inspected.

According to a vacuum heat insulation piping unit 1 for a liquefied gas, a storage tank unit, and a breakage detection method in accordance with the embodiment as discussed thus far, it is possible to find out when the outer-tube pressure relief device 15 is highly likely to be actuated before actual actuation by relying on measurement of a pressure inside the inner tube 7 of the pipe 5 with a double-walled vacuum structure and, moreover, to detect a breakage in the pipe 5 with a simple design and in a timely and reliable manner because the type of a gas discharged through the outer-tube pressure relief device 15 is detected in combination with the pressure measurement.

Although the present disclosure has been described in terms of the preferred embodiments thereof with reference to the drawings, various additions, modifications, or omissions may be made without departing from the scope of the present disclosure. Accordingly, such variants are included within the scope of the present disclosure.

### [Reference Numerals]

- 1: piping unit
- 3: liquefied gas storage tank unit
- 5: vacuum heat insulation pipe
- 7: inner tube
- 9: outer tube
- 11: vacuum layer
- 13: inner-tube pressure measuring device
- 15: outer-tube pressure relief valve
- 17: gas detector
- 19: tank

## Claims

1. A vacuum heat insulation piping unit (1) for a liquefied gas, the piping unit (1) being configured to transfer the liquefied gas and comprising:
a vacuum heat insulation pipe (5) including an inner tube (7) configured to convey the liquefied gas therethrough and an outer tube (9) covering the inner tube (7) with a vacuum layer (11) defined between the inner tube (7) and the outer tube (9);
an inner-tube pressure measuring device (13) configured to measure a pressure inside the inner tube (7);
an outer-tube pressure relief valve (15) located on the outer tube (9); and
a gas detector (17) configured to detect the type of a gas (G) that is discharged through the outer-tube pressure relief valve (15).

2. The vacuum heat insulation piping unit (1) for the liquefied gas as claimed in claim 1, wherein the gas detector (17) comprises a gas detection tape attached to a gas discharge outlet (37) of the outer-tube pressure relief valve (15).

3. A liquefied gas storage tank unit (3) comprising:
a tank (19) configured to store a liquefied gas; and
a vacuum heat insulation piping unit (1) for the liquefied gas as claimed in claim 1 or 2, the piping unit (1) being mounted to the tank (19) and being configured to transfer the liquefied gas between the tank (19) and a place (21) external thereto.

4. A method for detecting occurrence of a breakage in a vacuum heat insulation pipe (1) for transferring a liquefied gas, the vacuum heat insulation pipe (1) including an inner tube (7) configured to convey the liquefied gas therethrough and an outer tube (9) covering the inner tube (7) with a vacuum layer (11) defined between the inner tube (7) and the outer tube (9), the method comprising:
monitoring (S1) a pressure inside the inner tube (7) by using an inner-tube pressure measuring device (13) configured to measure the pressure inside the inner tube (7);
when an abnormal change is detected in measurements taken by the inner-tube pressure measuring device (13), monitoring (S2) whether an outer-tube pressure relief device (15) located on the outer tube (9) is actuated within a selected time period;
when the outer-tube pressure relief device (15) is activated, detecting (S3) whether a detection target gas (G) is discharged by using a gas detector (17); and
determining (S4) occurrence of a breakage in the inner tube (7) or in the outer tube (9) on the basis of the measurements taken by the inner-tube pressure measuring device (13) and the presence or absence of discharge of the detection target gas (G) as indicated by the gas detector (17).

5. The method as claimed in claim 4, comprising
in the monitoring (S1) of the pressure inside the inner tube (7), detecting the abnormal change in the form of a drop in the measurements taken by the inner-tube pressure measuring device (13),
upon detection of the drop in the measurements taken by the inner-tube pressure measuring device (13), monitoring (S2) whether the outer-tube pressure relief device (15) is activated within the selected time period, and
when the outer-tube pressure relief device (15) is activated, detecting (S3) discharge of the detection target gas (G) by using the gas detector (17) to determine occurrence of a breakage in the inner tube (7).

6. The method as claimed in claim 5, comprising
when the outer-tube pressure relief device (15) is not activated within the selected time period after detection of the drop in the measurements taken by the inner-tube pressure measuring device (13), supplying (S5) the detection target gas (G) from an external source into the inner tube (7),
upon supplying the detection target gas (G) into the inner tube (7), monitoring (S2) whether the outer-tube pressure relief device (15) is activated within the selected time period, and
when the outer-tube pressure relief device (15) is activated, detecting (S3) discharge of the detection target gas (G) by using the gas detector (17) to determine occurrence of a breakage in the inner tube (7).

7. The method as claimed in claim 4, comprising
in the monitoring (S1) of the pressure inside the inner tube (7), detecting the abnormal change in the form of a rapid rise in the measurements taken by the inner-tube pressure measuring device (13),
upon detection of the rapid rise in the measurements taken by the inner-tube pressure measuring device (13), monitoring (S2) whether the outer-tube pressure relief device (15) is activated within the selected time period, and
when the outer-tube pressure relief device (15) is activated, confirming that there has been no discharge of the detection target gas (G) by using the gas detector (17) to determine occurrence of a breakage in the outer tube (9).

## Patentansprüche

1. Vakuumwärmeisolationsrohrleitungseinheit (1) für ein verflüssigtes Gas, wobei die Rohrleitungseinheit (1) konfiguriert ist, um das verflüssigte Gas zu übertragen und umfassend:
ein Vakuumwärmeisolationsrohr (5), das einen Innenschlauch (7), der konfiguriert ist, um das verflüssigte Gas dahindurch zu leiten, und einen Außenschlauch (9) einschließt, der den Innenschlauch (7) bedeckt, wobei eine Vakuumschicht (11) zwischen dem Innenschlauch (7) und dem Außenschlauch (9) definiert ist;
eine Innenschlauchdruckmessvorrichtung (13), die konfiguriert ist, um einen Druck im Inneren des Innenschlauchs (7) zu messen;
ein Außenschlauchdruckentlastungsventil (15), das sich auf dem Außenschlauch (9) befindet; und
einen Gasdetektor (17), der konfiguriert ist, um die Art eines Gases (G) zu erkennen, das durch das Außenschlauchdruckentlastungsventil (15) abgelassen wird.

2. Vakuumwärmeisolationsrohrleitungseinheit (1) für das verflüssigte Gas nach Anspruch 1, wobei der Gasdetektor (17) ein Gasdetektionsband umfasst, das an einem Gasablassauslass (37) des Außenschlauchdruckentlastungsventils (15) angebracht ist.

3. Lagertankeinheit (3) für verflüssigtes Gas, umfassend:
einen Tank (19), der konfiguriert ist, um ein verflüssigtes Gas zu lagern; und
eine Vakuumwärmeisolationsrohrleitungseinheit (1) für das verflüssigte Gas nach Anspruch 1 oder 2, wobei die Rohrleitungseinheit (1) an dem Tank (19) montiert ist und konfiguriert ist, um das verflüssigte Gas zwischen dem Tank (19) und einem Ort (21) außerhalb davon zu übertragen.

4. Verfahren zum Erkennen eines Auftretens eines Bruchs in einem Vakuumwärmeisolationsrohr (1) zum Übertragen eines verflüssigten Gases, wobei das Vakuumwärmeisolationsrohr (1) einen Innenschlauch (7), der konfiguriert ist, um das verflüssigte Gas dahindurch zu leiten, und einen Außenschlauch (9) einschließt, der den Innenschlauch (7) mit einer Vakuumschicht (11) bedeckt, die zwischen dem Innenschlauch (7) und dem Außenschlauch (9) definiert ist, das Verfahren umfassend:
Überwachen (S1) eines Drucks im Inneren des Innenschlauchs (7) durch Verwenden einer Innenschlauchdruckmessvorrichtung (13), die konfiguriert ist, um den Druck im Inneren des Innenschlauchs (7) zu messen;
wenn eine abnormale Änderung in den Messungen erkannt wird, die durch die Innenschlauchdruckmessvorrichtung (13) erfasst werden, Überwachen (S2), ob eine Außenschlauchdruckentlastungsvorrichtung (15), die sich auf dem Außenschlauch (9) befindet, innerhalb einer gewählten Zeitspanne betätigt wird;
wenn die Außenschlauchdruckentlastungsvorrichtung (15) aktiviert ist, Erkennen (S3), ob ein Detektionszielgas (G) abgelassen wird, durch Verwenden eines Gasdetektors (17); und
Bestimmen (S4) des Auftretens eines Bruchs in dem Innenschlauch (7) oder in dem Außenschlauch (9) basierend auf den Messungen, die durch die Innenschlauchdruckmessvorrichtung (13) erfasst werden, und dem Vorhandensein oder Nichtvorhandensein eines Ablasses des Detektionszielgases (G), wie durch den Gasdetektor (17) angezeigt.

5. Verfahren nach Anspruch 4, umfassend
bei dem Überwachen (S1) des Drucks im Inneren des Innenschlauchs (7), Erkennen der abnormalen Änderung in der Form eines Abfalls in den Messungen, die durch die Innenschlauchdruckmessvorrichtung (13) erfasst werden,
bei dem Erkennen des Abfalls der Messungen, die durch die Innenschlauchdruckmessvorrichtung (13) erfasst werden, Überwachen (S2), ob die Außenschlauchdruckentlastungsvorrichtung (15) innerhalb der gewählten Zeitspanne aktiviert wird, und
wenn die Außenschlauchdruckentlastungsvorrichtung (15) aktiviert wird, Erkennen (S3) des Ablassens des Detektionszielgases (G) durch Verwenden des Gasdetektors (17), um das Auftreten eines Bruchs in dem Innenschlauch (7) zu bestimmen.

6. Verfahren nach Anspruch 5, umfassend
wenn die Außenschlauchdruckentlastungsvorrichtung (15) nicht innerhalb der gewählten Zeitspanne nach der Erkennung des Abfalls in den Messungen aktiviert wird, die durch die Innenschlauchdruckmessvorrichtung (13) erfasst werden, Zuführen (S5) des Detektionszielgases (G) aus einer externen Quelle in den Innenschlauch (7),
bei dem Zuführen des Detektionszielgases (G) in den Innenschlauch (7), Überwachen (S2), ob die Außenschlauchdruckentlastungsvorrichtung (15) innerhalb der gewählten Zeitspanne aktiviert wird, und
wenn die Außenschlauchdruckentlastungsvorrichtung (15) aktiviert wird, Erkennen (S3) des Ablassens des Detektionszielgases (G) durch Verwenden des Gasdetektors (17), um das Auftreten eines Bruchs in dem Innenschlauch (7) zu bestimmen.

7. Verfahren nach Anspruch 4, umfassend
bei dem Überwachen (S1) des Drucks im Inneren des Innenschlauchs (7), Erkennen der abnormalen Änderung in der Form eines rapiden Anstiegs in den Messungen, die durch die Innenschlauchdruckmessvorrichtung (13) erfasst werden,
bei dem Erkennen des rapiden Anstiegs der Messungen, die durch die Innenschlauchdruckmessvorrichtung (13) erfasst werden, Überwachen (S2), ob die Außenschlauchdruckentlastungsvorrichtung (15) innerhalb der gewählten Zeitspanne aktiviert wird, und
wenn die Außenschlauchdruckentlastungsvorrichtung (15) aktiviert wird, Bestätigen, dass kein Ablass des Detektionszielgases (G) stattgefunden hat, durch Verwenden des Gasdetektors (17), um das Auftreten eines Bruchs in dem Außenschlauch (9) zu bestimmen.

## Revendications

1. Unité de tuyau (1) d'isolation thermique sous vide pour un gaz liquéfié, l'unité de tuyau (1) étant conçue pour transférer le gaz liquéfié et comprenant :
un tuyau (5) d'isolation thermique sous vide comportant un tube interne (7) conçu pour transporter le gaz liquéfié à travers celui-ci et un tube externe (9) recouvrant le tube interne (7) avec une couche sous vide (11) définie entre le tube interne (7) et le tube externe (9) ;
un dispositif de mesure de pression de tube interne (13) conçu pour mesurer une pression à l'intérieur du tube interne (7) ;
une soupape de surpression de tube externe (15) située sur le tube externe (9) ; et
un détecteur de gaz (17) conçu pour détecter le type d'un gaz (G) qui est déchargé à travers la soupape de surpression de tube externe (15).

2. Unité de tuyau (1) d'isolation thermique sous vide pour le gaz liquéfié selon la revendication 1, dans laquelle le détecteur de gaz (17) comprend une bande de détection de gaz fixée à une sortie de décharge de gaz (37) de la soupape de surpression de tube externe (15).

3. Unité de stockage de gaz liquéfié (3) comprenant :
un réservoir (19) conçu pour stocker un gaz liquéfié ; et
une unité de tuyau (1) d'isolation thermique sous vide pour le gaz liquéfié selon la revendication 1 ou 2, l'unité de tuyau (1) étant montée sur le réservoir (19) et étant conçue pour transférer le gaz liquéfié entre le réservoir (19) et un emplacement (21) à l'extérieur de celui-ci.

4. Procédé de détection de l'apparition d'une rupture dans un tuyau (1) d'isolation thermique sous vide destiné à transférer un gaz liquéfié, le tuyau (1) d'isolation thermique sous vide comportant un tube interne (7) conçu pour transporter le gaz liquéfié à travers celui-ci et un tube externe (9) recouvrant le tube interne (7) avec une couche sous vide (11) définie entre le tube interne (7) et le tube externe (9), le procédé comprenant :
la surveillance (S1) d'une pression à l'intérieur du tube interne (7) à l'aide d'un dispositif de mesure de pression de tube interne (13) conçu pour mesurer la pression à l'intérieur du tube interne (7) ;
lorsqu'un changement anormal est détecté dans des mesures prises par le dispositif de mesure de pression de tube interne (13), la surveillance (S2) du fait qu'un dispositif de surpression de tube externe (15) situé sur le tube externe (9) est actionné à l'intérieur d'une période de temps sélectionnée ;
lorsque le dispositif de surpression de tube externe (15) est activé, la détection (S3) du fait qu'un gaz cible de détection (G) est déchargé à l'aide d'un détecteur de gaz (17) ; et
la détermination (S4) de l'apparition d'une rupture dans le tube interne (7) ou dans le tube externe (9) sur la base des mesures prises par le dispositif de mesure de pression de tube interne (13) et de la présence ou de l'absence de décharge du gaz cible de détection (G) comme indiquée par le détecteur de gaz (17).

5. Procédé selon la revendication 4, comprenant :
dans la surveillance (S1) de la pression à l'intérieur du tube interne (7), la détection du changement anormal sous la forme d'une chute dans les mesures prises par le dispositif de mesure de pression de tube interne (13),
lors de la détection de la chute dans les mesures prises par le dispositif de mesure de pression de tube interne (13), la surveillance (S2) du fait que le dispositif de surpression de tube externe (15) est activé à l'intérieur de la période de temps sélectionnée, et
lorsque le dispositif de surpression de tube externe (15) est activé, la détection (S3) de décharge du gaz cible de détection (G) à l'aide du détecteur de gaz (17) afin de déterminer l'apparition d'une rupture dans le tube interne (7).

6. Procédé selon la revendication 5, comprenant :
lorsque le dispositif de surpression de tube externe (15) n'est pas activé à l'intérieur de la période de temps sélectionnée après la détection de la chute dans les mesures prises par le dispositif de mesure de pression de tube interne (13), la fourniture (S5) du gaz cible de détection (G) à partir d'une source externe dans le tube interne (7),
lors de la fourniture du gaz cible de détection (G) dans le tube interne (7), la surveillance (S2) du fait que le dispositif de surpression de tube externe (15) est activé à l'intérieur de la période de temps sélectionnée, et
lorsque le dispositif de surpression de tube externe (15) est activé, la détection (S3) de décharge du gaz cible de détection (G) à l'aide du détecteur de gaz (17) afin de déterminer l'apparition d'une rupture dans le tube interne (7).

7. Procédé selon la revendication 4, comprenant :
dans la surveillance (S1) de la pression à l'intérieur du tube interne (7), la détection du changement anormal sous la forme d'une augmentation rapide dans les mesures prises par le dispositif de mesure de pression de tube interne (13),
lors de la détection de l'augmentation rapide dans les mesures prises par le dispositif de mesure de pression de tube interne (13), la surveillance (S2) du fait que le dispositif de surpression de tube externe (15) est activé à l'intérieur de la période de temps sélectionnée, et
lorsque le dispositif de surpression de tube externe (15) est activé, la confirmation du qu'il n'y a pas eu de décharge du gaz cible de détection (G) à l'aide du détecteur de gaz (17) afin de déterminer l'apparition d'une rupture dans le tube externe (9).
